# EUROPEAN PATENT APPLICATION

(11) **EP 3 179 183 A1**
(43) Date of publication of application: **14.06.2017**
(21) Application number: 15842114.9
(22) Date of filing: 21.07.2015
(51) Int. Cl.: F25D 17/08, F25D 11/00, F25D 19/00, F25D 21/14, F25D 23/00, F25D 29/00

(54) **REFRIGERATION DEVICE FOR CONTAINER**

(30) Priority: 16.09.2014 JP 2014188029
(71) Applicant: Daikin Industries, Ltd., Osaka-shi, Osaka 530-8323 (JP)
(72) Inventor: KAMEI, Noritaka, Osaka-shi, Osaka 530-8323 (JP); YOKOHARA, Kazuma, Osaka-shi, Osaka 530-8323 (JP); TANAKA, Naohiro, Osaka-shi, Osaka 530-8323 (JP); OZATO, Atsushi, Osaka-shi, Osaka 530-8323 (JP)
(74) Representative: Hoffmann Eitle
(86) International application number: PCT/JP2015/003646
(87) International publication number: WO 2016/042695

(57) **Abstract**

Disclosed herein is a container refrigeration apparatus (10) including an exterior fan (25) and a gas supply device (30). The gas supply device (30) includes a unit case (70) having a cooling air inlet port (79a) and a cooling air outlet port (79b), and a pump mechanism (31P) housed in the unit case (70) and configured to suck, and compress, outside air. The container refrigeration apparatus (10) has an exhaust passage (85) through which the unit case (70) and a space on a suction side of the exterior fan (25) are connected together such that the exterior fan (25) sucks air through the cooling air outlet port (79b) out of the unit case (70). As a result, the problem of heat generated by the gas supply device including the pump mechanism may be solved at low cost.

## Description

### TECHNICAL FIELD

The present invention relates to a refrigeration apparatus for a container.

### BACKGROUND ART

Container refrigeration apparatuses have been used to cool the interior of a container for use in, e.g., marine transportation (see, e.g., Patent Document 1).

The container is loaded with plants such as bananas and avocados. Plants perform respiration by absorbing oxygen in the air and releasing carbon dioxide even after they are harvested. If the oxygen concentration in the container is reduced to a predetermined target concentration as a result of the plant respiration, the respiration rate of the plant decreases. However, since it takes time to reach such a target concentration, the plants will discolor, rot, or deteriorate in other ways in the meantime, which results in a decreased degree of freshness.

To address this problem, a container refrigeration apparatus of Patent Document 1 includes a gas supply device which produces nitrogen-enriched air having a higher nitrogen concentration than outside air and supplies the nitrogen-enriched air into the container. The gas supply device includes a pump mechanism which absorbs outside air and compresses the absorbed air, and a generator which produces nitrogen-enriched air from the compressed air discharged by the pump mechanism. If the oxygen concentration of the air in the container is quickly reduced by supplying nitrogen-enriched air into the container, and the oxygen concentration of the air in the container is thus set to be lower than that of the outside air, the respiration rate of the plants may be reduced so much that their degree of freshness can be maintained more easily.

### CITATION LIST

### PATENT DOCUMENT

PATENT DOCUMENT 1: Japanese Patent No. 2635535

### SUMMARY OF THE INVENTION

### TECHNICAL PROBLEM

Components of the gas supply device may be housed in a hermetically sealed unit case so as to form a unit. This may facilitate assembling the gas supply device.

Unfortunately, a pump mechanism of a gas supply device generates heat when compressing air. To prevent the generated heat from causing the pump mechanism to break down or from adversely affecting surrounding components, the heat generated by the pump mechanism needs to be released out of the unit case. Meanwhile, it is not recommended to provide a component such as a fan only for the purpose of releasing the heat, because providing such a component leads to an increase in cost and size of the apparatus.

In view of the foregoing background, it is therefore an object of the present invention to solve, at low cost, the problem of heat generated by a gas supply device including a pump mechanism.

### SOLUTION TO THE PROBLEM

A first aspect of the present disclosure relates to a container refrigeration apparatus (10) including: a refrigerant circuit (20) including a radiator (22) and an evaporator (24) and performing a refrigeration cycle; an exterior fan (25) configured to supply air outside a container to the radiator (22); an interior fan (26) configured to supply air inside the container to the evaporator (24); and a gas supply device (30) configured to produce nitrogen-enriched air having a higher nitrogen concentration than outside air, and to supply the nitrogen-enriched air into the container. The gas supply device (30) includes: a unit case (70) disposed outside a container (11) and having a cooling air inlet port (79a) and a cooling air outlet port (79b); a pump mechanism (31P) housed in the unit case (70) and configured to suck, and compress, outside air; and a generator (34, 35) configured to produce nitrogen-enriched air from the compressed air discharged by the pump mechanism (31P). The container refrigeration apparatus (10) has an exhaust passage (85) through which the unit case (70) and a space on the suction side of the exterior fan (25) are connected together such that the exterior fan (25) sucks air through the cooling air outlet port (79b) out of the unit case (70).

According to the first aspect, air in the container (11) is cooled by the evaporator (24), and heat transferred in the evaporator (24) from the air in the container to a refrigerant is released in the radiator (22) into air outside the container. In the gas supply device (30), the pump mechanism (31P) sucks, and compresses, outside air, and then the generator (34, 35) produces nitrogen-enriched air from the compressed air. The nitrogen-enriched air produced is supplied into the container (11).

The pump mechanism (31 P) generates heat when compressing outside air. The generated heat may cause the pump mechanism (31P) to break down, or may adversely affect surrounding components. However, in the container refrigeration apparatus (10) according to the first aspect, the exterior fan (25) sucks the air in the unit case (70) through the exhaust passage (85) out of the cooling air outlet port (79b). This results in an air flow from the cooling air inlet port (79a) through the unit case (70) toward the cooling air outlet port (79b). Heat generated by the pump mechanism (31P) joins the air flow, and is released through the cooling air outlet port (79b) out of the unit case (70).

According to a second aspect of the present disclosure which is an embodiment of the first aspect, the exhaust passage (85) may be defined by an exhaust tube (85), and the exhaust tube (85) may have an inlet end connected to the cooling air outlet port (79b), and an outlet end open in the space on the suction side of the exterior fan (25).

According to the second aspect, the heat generated by the pump mechanism (31P) is released through the exhaust tube (85) out of the unit case (70).

According to a third aspect of the present disclosure which is an embodiment of the second aspect, at least one portion of the exhaust tube (85) may be configured as a downwardly extending portion (85a) extending downward from a point near an inlet of the exhaust tube toward an outlet of the exhaust tube.

According to the third aspect, even if seawater or another liquid enters the exhaust tube (85) through the outlet end of the exhaust tube (85), the liquid cannot move against gravity through the downwardly extending portion (85a) toward the inlet end of the exhaust tube (85). That is to say, seawater and other liquids are prevented from flowing into a portion of the exhaust tube (85) closer to the inlet end thereof than the downwardly extending portion (85a), which prevents seawater and other liquids from flowing through the exhaust tube (85) and the cooling air outlet port (79b) into the unit case (70).

According to a fourth aspect of the present disclosure which is an embodiment of the second or third aspect, the unit case (70) may have a box shape, and include a top panel (72b) and side panels (72a), the top panel (72b) having a tilted portion (72c) which descends toward one of the side panels (72a), and the tilted portion (72c) may be provided with a connection portion (72e) to which the exhaust tube (85) is connected.

According to the fourth aspect, the inlet end of the exhaust tube (85) is connected to the connection portion (72e) provided on the tilted portion (72c). A space appearing to be formed by cutting away a portion of the box-shaped unit case (70) is located near the tilted portion (72c). This space may be used to provide the connection portion (72e).

According to a fifth aspect of the present disclosure which is an embodiment of the fourth aspect, an electrical component (32, 33, 36, 82) forming the gas supply device (30) may be disposed under the tilted portion (72c).

According to the fifth aspect, the electrical component (32, 33, 36, 82) is disposed under the tilted portion (72c). Low outside air temperatures may cause condensation on an inner wall of the unit case (70). Water condensed on the tilted portion (72c) of the top panel (72b) flows along the tilted portion (72c) to its lower end. This prevents the condensed water from dripping on the electrical component (32, 33, 36, 82), which is disposed under the tilted portion (72c) and form the gas supply device (30).

According to a sixth aspect of the present disclosure which is an embodiment of any one of the first through fifth aspects, the container refrigeration apparatus may further include: a cooling fan (79) housed in the unit case (70) and configured to send air to the pump mechanism (31 P).

According to the sixth aspect, the pump mechanism (31 P) is cooled by the cooling fan (79).

According to a seventh aspect of the present disclosure which is an embodiment of the sixth aspect, the cooling air inlet port (79a) may be located in a space on the suction side of the cooling fan (79).

According to the seventh aspect, the cooling fan (79) produces an air flow from the cooling air inlet port (79a) toward the interior of the unit case (70). This further accelerates the air flow from the cooling air inlet port (79a) through the unit case (70) toward the cooling air outlet port (79b), thereby facilitating a transfer of heat to the air flowing from the pump mechanism (31 P) through the unit case (70).

According to an eighth aspect of the present disclosure which is an embodiment of the sixth or seventh aspect, the container refrigeration apparatus may further include: a branch member (84) configured to guide part of air blown out by the cooling fan (79) to the electrical component (32, 33, 36, 82) which forms the gas supply device (30).

According to the eighth aspect, part of the air blown out by the cooling fan (79) is guided to the electrical component (32, 33, 36, 82) which forms the gas supply device (30). Thus, the cooling fan (79) cools not only the pump mechanism (31P) but also the electrical component (32, 33, 36, 82).

### ADVANTAGES OF THE INVENTION

According to the first aspect, heat generated by the pump mechanism (31P) joins the air flow, and is released through the cooling air outlet port (79b) out of the unit case (70). This air flow is produced by the exterior fan (25) for supplying the outside air to the radiator (22). Thus, while the exhaust tube (85) needs to be provided to solve the problem of heat, an additional component such as a fan does not have to be provided. Thus, the problem of heat generated by the gas supply device (30) may be solved at low cost.

According to the second aspect, the exhaust tube (85) having a simple structure may define the exhaust passage (85). Thus, the problem of heat generated by the gas supply device (30) may be solved at lower cost.

According to the third aspect, at least one portion of the exhaust tube (85) is configured as the downwardly extending portion (85a). This may prevent seawater and other liquids from flowing through the exhaust tube (85) and the cooling air outlet port (79b) into the unit case (70).

According to the fourth aspect, a space near the tilted portion (72c) may be used to provide the connection portion (72e) to which the exhaust tube (85) is connected. This may save space occupied by the gas supply device (30).

According to the fifth aspect, condensed water is prevented from dripping on the electrical component (32, 33, 36, 82) which is disposed under the tilted portion (72c) and form the gas supply device (30). This may prevent the condensed water from causing the electrical component (32, 33, 36, 82) to break down.

According to the sixth aspect, the pump mechanism (31P) may be cooled by the cooling fan (79). Thus, the problem of heat may be solved more effectively.

According to the seventh aspect, the cooling fan (79) may further accelerate the air flow from the cooling air inlet port (79a) through the unit case (70) toward the cooling air outlet port (79b), thereby facilitating the transfer of heat to the air flowing from the pump mechanism (31P) through the unit case (70). Thus, the problem of heat may be solved more effectively.

According to the eighth aspect, air blown out by the cooling fan (79) may be used to cool the electrical component (32, 33, 36, 82) forming the gas supply device (30). Thus, the problem of heat generated by the electrical component (32, 33, 36, 82) may be solved at low cost.

### BRIEF DESCRIPTION OF THE DRAWINGS

[FIG. 1] FIG. 1 is a perspective view of a container refrigeration apparatus according to an embodiment of the present invention, as viewed from outside of a container.
[FIG. 2] FIG. 2 is a side cross-sectional view illustrating a configuration for a container refrigeration apparatus according to an embodiment.
[FIG. 3] FIG. 3 is a piping system diagram illustrating a configuration for a refrigerant circuit according to an embodiment.
[FIG. 4] FIG. 4 is a piping system diagram illustrating a configuration for a controlled atmosphere (CA) system according to an embodiment.
[FIG. 5] FIG. 5 is a perspective view illustrating an appearance of a gas supply device according to an embodiment.
[FIG. 6] FIG. 6 is a front view of a gas supply device according to an embodiment, and illustrates, with solid lines, how internal components of the gas supply device are arranged.
[FIG. 7] FIG. 7 is a plan view of a gas supply device according to an embodiment, and illustrates, with solid lines, how internal components of the gas supply device are arranged.
[FIG. 8] FIG. 8 is a left side view of a gas supply device according to an embodiment, and illustrates, with solid lines, how internal components of the gas supply device are arranged.
[FIG. 9] FIG. 9 is a front perspective view of a gas supply device according to an embodiment, and illustrates, with solid lines, how internal components of the gas supply device are arranged.
[FIG. 10] FIG. 10 is a rear perspective view of a gas supply device according to an embodiment, and illustrates, with solid lines, how internal components of the gas supply device are arranged.
[FIG. 11] FIG. 11 is an enlarged front view illustrating an external storage space of a container refrigeration apparatus according to an embodiment.
[FIG. 12] FIG. 12 is a front perspective view of a gas supply device according to a first variation of an embodiment, and illustrates, with solid lines, how internal components of the gas supply device are arranged.
[FIG. 13] FIG. 13 is a rear perspective view of a gas supply device according to a first variation of an embodiment, and illustrates, with solid lines, how internal components of the gas supply device are arranged.
[FIG. 14] FIG. 14 is a plan view of a gas supply device according to a first variation of an embodiment, and illustrates, with solid lines, how internal components of the gas supply device are arranged.
[FIG. 15] FIG. 15 is a front view of a gas supply device according to a second variation of an embodiment, and illustrates, with solid lines, how internal components of the gas supply device are arranged.

### DESCRIPTION OF EMBODIMENTS

Embodiments of the present invention will now be described with reference to the accompanying drawings. The following embodiments are merely beneficial examples in nature, and are not intended to limit the scope, application, or uses of the present invention.

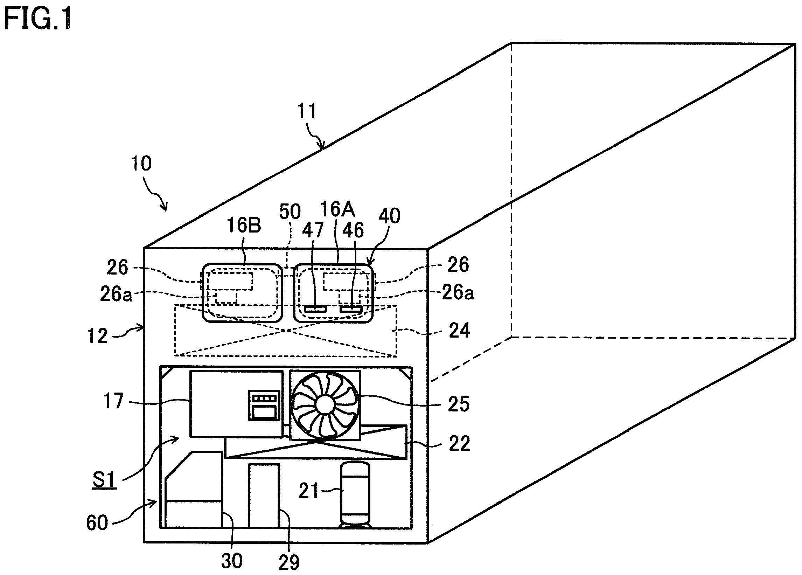

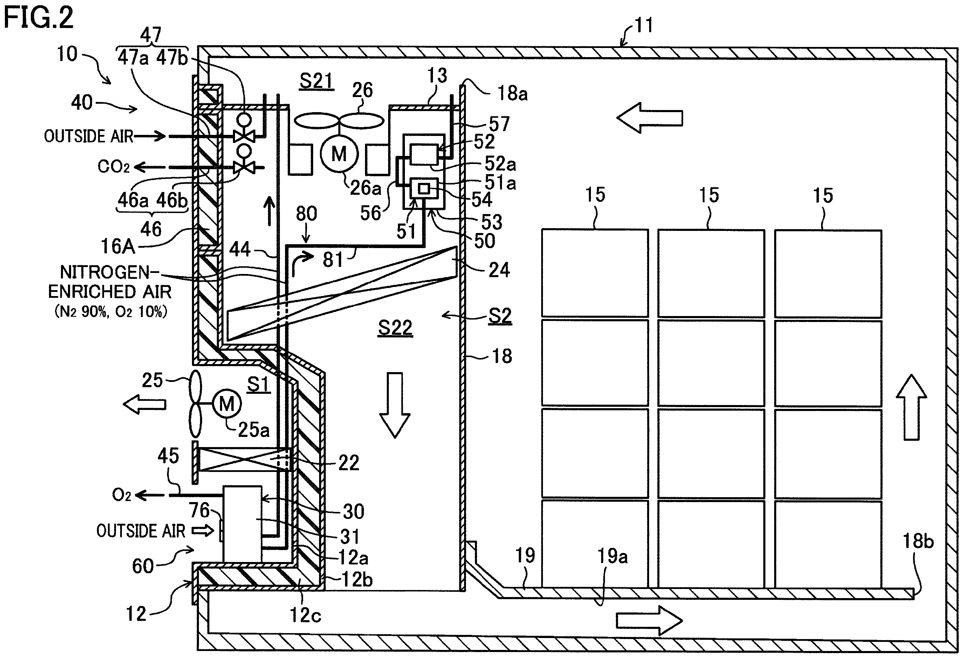

As illustrated in FIGS. 1 and 2, a container refrigeration apparatus (10) is provided in a container (11) for use in, e.g., marine transportation, and cools air inside the container (11). Inside the container (11), boxed plants (15) are stored. The plants (15) perform respiration by absorbing oxygen (O₂) in the air and releasing carbon dioxide (CO₂) into the air, and examples of such plants (15) include fruit like bananas and avocados, vegetables, cereals, bulbous plants, and natural flowers.

The container (11) has the shape of an elongated box with an open end surface. The container refrigeration apparatus (10) includes a casing (12), a refrigerant circuit (20), and a controlled atmosphere (CA) system (60), and is installed so as to close the open end of the container (11).

### <Casing>

As illustrated in FIG. 2, the casing (12) includes an exterior wall (12a) disposed outside the container (11) and an interior wall (12b) disposed inside the container (11). The exterior and interior walls (12a) and (12b) may be made of aluminum alloy, for example.

The exterior wall (12a) is attached to the periphery of the opening of the container (11) so as to close the open end of the container (11). The exterior wall (12a) is formed such that a lower part of the exterior wall (12a) protrudes into the interior of the container (11).

The interior wall (12b) is disposed so as to face the exterior wall (12a). The interior wall (12b) protrudes, just like the lower part of the exterior wall (12a), into the container (11). A thermal insulator (12c) fills a space between the interior and exterior walls (12b, 12a).

As described above, the lower part of the casing (12) is formed so as to protrude into the container (11). Thus, an external storage space (S1) is formed outside the container (11) in the lower part of the casing (12), and an internal storage space (S2) is formed inside the container (11) in the upper part of the casing (12).

As illustrated in FIG. 1, the casing (12) has two access openings for maintenance which are arranged side by side in the width direction of the casing (12). The two access openings are closed respectively by first and second access doors (16A, 16B) which are openable and closable. Each of the first and second access doors (16A, 16B) is comprised of, just like the casing (12), an exterior wall, an interior wall, and a thermal insulator. As described in detail below, the first access door (16A) which closes the access opening illustrated on the right in FIG. 1, and exhaust and intake portions (46) and (47), which will be described later, constitute an access door unit (40).

As illustrated in FIG. 2, a partition plate (18) is disposed inside the container (11). This partition plate (18) is configured as a substantially rectangular plate member, and stands upright so as to face the wall of the casing (12) inside the container (11). This partition plate (18) separates the internal storage space (S2) from the interior of the container (11).

A suction port (18a) is formed between an upper end of the partition plate (18) and the ceiling surface of the container (11). Air inside the container (11) (inside air) is taken through the suction port (18a) into the internal storage space (S2).

The internal storage space (S2) is further provided with a partition wall (13) extending in the horizontal direction. The partition wall (13) is attached to the upper end of the partition plate (18), and has an opening in which interior fans (26), which will be described later, are disposed. The partition wall (13) partitions the internal storage space (S2) into a first space (S21) which is the suction side of the interior fans (26), and a second space (S22) which is the blowout side of the interior fans (26).

Inside the container (11), a floorboard (19) is disposed with a gap left between the floorboard (19) and a bottom surface of the container (11). On the floorboard (19), boxed plants (15) are mounted. An underfloor path (19a) is formed between the floorboard (19) and the bottom surface of the container (11). A gap is also left between the lower end of the partition plate (18) and the bottom surface of the container (11), and communicates with the underfloor path (19a).

A blowout port (18b) blowing the air which has been cooled by the container refrigeration apparatus (10) into the container (11) is provided at an end of the floorboard (19) opposite from the open end of the container (11) (on the right side in FIG. 2).

### <Refrigerant Circuit>

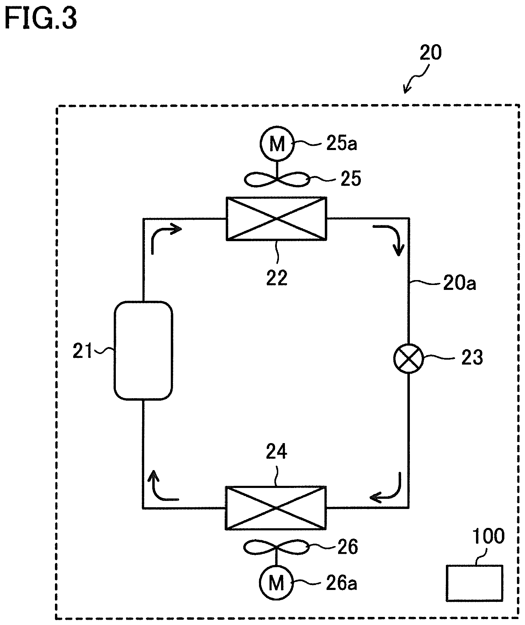

As illustrated in FIG. 3, the refrigerant circuit (20) is a closed circuit in which a compressor (21), a radiator (22), an expansion valve (23), and an evaporator (24) are connected together in this order by a refrigerant piping system (20a).

An exterior fan (25) is disposed in the vicinity of the radiator (22). The exterior fan (25) is driven in rotation by an exterior fan motor (25a), guides air from outside the container (11) (outside air) into the external storage space (S1) and sends it to the radiator (22). In the radiator (22), heat is exchanged between a refrigerant, which has been compressed by the compressor (21) and is flowing through the radiator (22), and the outside air, which has been sent by the exterior fan (25) to the radiator (22).

The interior fans (26) are disposed in the vicinity of the evaporator (24). The interior fans (26) are driven in rotation by interior fan motors (26a), and guide the air inside the container (11) through the suction port (18a) to blow the air into the evaporator (24). In the evaporator (24), heat is exchanged between a refrigerant, which has been decompressed by the expansion valve (23) and is flowing through the evaporator (24), and the inside air, which has been sent by the interior fans (26) to the evaporator (24).

As illustrated in FIG. 1, the compressor (21) and the radiator (22) are housed in the external storage space (S1). The exterior fan (25) is disposed above the radiator (22). An electrical component box (17) is disposed in the external storage space (S1) so as to be adjacent to the exterior fan (25). An inverter box (29) is disposed under the electrical component box (17). The inverter box (29) houses a driver circuit which drives the compressor (21) at variable velocities.

On the other hand, as illustrated in FIG. 2, the evaporator (24) is housed in the internal storage space (S2). The two interior fans (26) are disposed above the evaporator (24) in the internal storage space (S2) and arranged side by side in the width direction of the casing (12).

### <CA System>

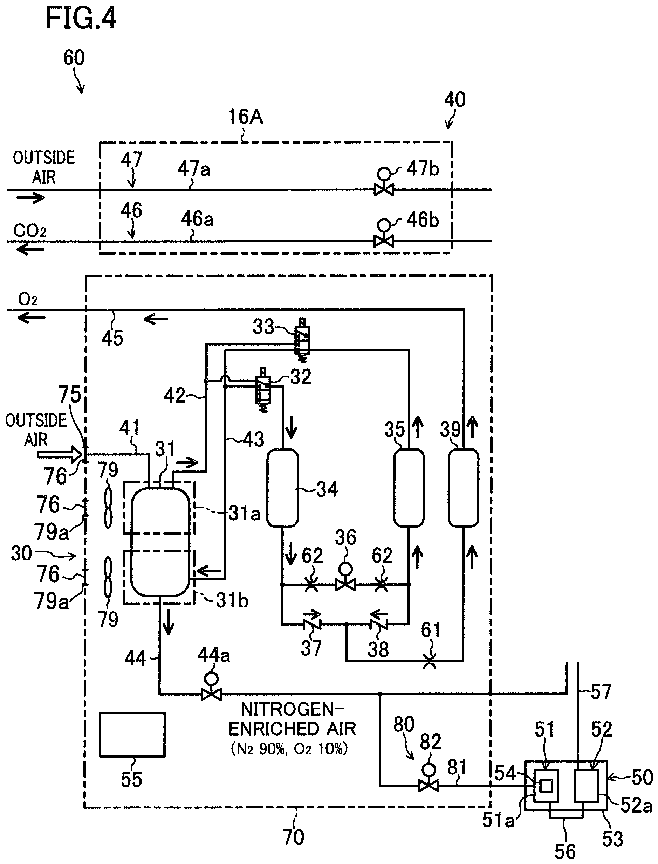

As shown in FIG. 4, the CA system (60) includes a gas supply device (30), the access door unit (40), a sensor unit (50), a measurement unit (80), a concentration controller (55), and an exhaust tube (85). The CA system (60) controls the oxygen and carbon dioxide concentrations of the air inside the container (11). The term "concentration" used in the following description always indicates a "volumetric concentration."

### [Gas Supply Device]

The gas supply device (30) produces nitrogen-enriched air with a low oxygen concentration to be supplied into the container (11). In the present embodiment, the gas supply device (30) includes a vacuum pressure swing adsorption (VPSA) device. Further, the gas supply device (30) is disposed in the lower left corner of the external storage space (S1), as shown in FIG. 1.

As shown in FIG. 4, the gas supply device (30) includes an air pump (31), first and second directional control valves (32) and (33), first and second adsorption columns (34) and (35) each provided with an adsorbent for adsorbing nitrogen from the air, a purge valve (36), first and second check valves (37) and (38), an oxygen tank (39), and a unit case (70) housing these components. In this manner, the gas supply device (30) forms a single unit with these components housed in the unit case (70), and may be later attached to the container refrigeration apparatus (10).

The air pump (31) is disposed in the unit case (70). The air pump (31) sucks and compresses outside air that has flowed through an air inlet port (75) of the unit case (70) from outside the unit case (70) into the unit case (70). The air pump (31) includes a pressurization portion (31a) which pressurizes the first and second adsorption columns (34) and (35) by supplying the first and second adsorption columns (34) and (35) with the compressed air through an outflow passage (42) to perform an adsorption operation for adsorbing nitrogen in the air onto the adsorbent. The air inlet port (75) of the unit case (70) is provided with a permeable, waterproof membrane filter (76).

The air pump (31) further includes a depressurization portion (31b) which depressurizes the first or second adsorption column (34) or (35) by sucking the air from the adsorption column (34) or (35) through a suction passage (43) to perform a desorption operation for desorbing nitrogen from the adsorbent.

The pressurization portion (31a) and the depressurization portion (31b) of the air pump (31) are configured as oil-less pumps without lubricant oil.

Two cooling fans (79) are disposed to a side of the air pump (31) to cool the air pump (31) by blowing air toward the air pump (31).

The first and second directional control valves (32) and (33) are used to alternately switch between the first and second adsorption columns (34) and (35) to perform the adsorption operation or the desorption operation.

The first directional control valve (32) is connected to a discharge port of the pressurization portion (31a), a suction port of the depressurization portion (31b), and the top of the first adsorption column (34). The first directional control valve (32) switches between a state where the first adsorption column (34) is allowed to communicate with the pressurization portion (31a) but is shut off from the depressurization portion (31b) (the state illustrated in FIG. 4), and a state where the first adsorption column (34) is allowed to communicate with the depressurization portion (31b) but is shut off from the pressurization portion (31 a).

The second directional control valve (33) is connected to the discharge port of the pressurization portion (31a), the suction port of the depressurization portion (31b), and the top of the second adsorption column (35). The second directional control valve (33) switches between a state where the second adsorption column (35) is allowed to communicate with the pressurization portion (31a) but is shut off from the depressurization portion (31b), and a state where the second adsorption column (35) is allowed to communicate with the depressurization portion (31b) but is shut off from the pressurization portion (31a) (the state illustrated in FIG. 4).

In the state illustrated in FIG. 4, the pressurization portion (31 a) performs an adsorption operation on the first adsorption column (34), and the depressurization portion (31b) performs a desorption operation on the second adsorption column (35). If the positions at which the first and second directional control valves (32) and (33) are switched are opposite from those in FIG. 4, the pressurization portion (31 a) performs an adsorption operation on the second adsorption column (35) and the depressurization portion (31b) performs a desorption operation on the first adsorption column (34) (not shown). The gas supply device (30) repeatedly performs the above-described process while interchanging between the first and second adsorption columns (34) and (35) to perform the adsorption operation or the desorption operation, thereby continuously producing nitrogen-enriched air in a stable manner. This switching operation is controlled by a concentration controller (55).

The first and second adsorption columns (34) and (35) are configured as cylindrical members filled with an adsorbent, and are disposed upright (i.e., disposed such that their axes are arranged in a vertical direction). The first and second adsorption columns (34) and (35) produce oxygen-enriched air by adsorbing nitrogen in the compressed air supplied from the air pump (31). The adsorbent which fills the first and second adsorption columns (34) and (35) has the property of adsorbing nitrogen in a state where the adsorption columns (34, 35) are pressurized, and desorbing nitrogen in a state where the adsorption columns (34, 35) are depressurized.

The adsorbent that fills the first and second adsorption columns (34) and (35) may be comprised of porous zeolite having pores with a diameter which is, e.g., smaller than the diameter of nitrogen molecules (3.0 angstrom) and larger than the diameter of oxygen molecules (2.8 angstrom). Use of the zeolite having pores of such a diameter allows nitrogen in the air to be adsorbed.

If the first and second adsorption columns (34) and (35) are depressurized by the air pump (31), the nitrogen adsorbed onto the adsorbent is desorbed. This produces nitrogen-enriched air which has had its oxygen concentration lowered by including more nitrogen than the outside air. In the present embodiment, this nitrogen-enriched air may consist of 90% nitrogen and 10% oxygen, for example.

The respective lower ends of the first and second adsorption columns (34) and (35) (functioning as an outlet port during pressurization and an inlet port during depressurization) communicate with each other via the purge valve (36). Orifices (62) are attached one each to a pipe between the lower end of the first adsorption column (34) and the purge valve (36) and to a pipe between the lower end of the second adsorption column (35) and the purge valve (36).

The purge valve (36) is used to introduce a predetermined amount of the oxygen-enriched air into an adsorption column on the depressurization side (the second adsorption column (35) in FIG. 4) from an adsorption column on the pressurization side (the first adsorption column (34) in FIG. 4) to help discharge nitrogen from the adsorbent of the adsorption column (35, 34) on the depressurization side. The concentration controller (55) controls an opening/closing operation of the purge valve (36).

The oxygen tank (39) temporarily retains oxygen-enriched air produced in the first and second adsorption columns (34) and (35). An inlet port of the oxygen tank (39) is connected to the respective lower ends of the first and second adsorption columns (34) and (35) through a piping system. A portion of the piping system through which the first adsorption column (34) and the oxygen tank (39) are connected together is provided with a first check valve (37) for preventing backflow of air from the oxygen tank (39) to the first adsorption column (34). Another portion of the piping system through which the second adsorption column (35) and the oxygen tank (39) are connected together is provided with a second check valve (38) for preventing backflow of air from the oxygen tank (39) to the second adsorption column (35). An orifice (61) is disposed between the first and second check valves (37) and (38) and the oxygen tank (39). The oxygen-enriched air produced by the first and second adsorption columns (34) and (35) is temporarily retained in the oxygen tank (39) after having been depressurized in the orifice (61).

The gas supply device (30) includes a supply passage (44) through which the nitrogen-enriched air sucked into the depressurization portion (31b) of the air pump (31) is supplied into the container (11), and an oxygen exhaust passage (45) through which the oxygen-enriched air retained in the oxygen tank (39) is exhausted out of the container (11).

The supply passage (44) has one end connected to the depressurization portion (31b) of the air pump (31), and the other end open in the first space (S21) which is the suction side of the interior fan (26) in the internal storage space (S2) of the container (11). The supply passage (44) is provided with a solenoid valve (44a) preventing backflow. The nitrogen-enriched air which has been sucked into the depressurization portion (31b) of the air pump (31) is supplied into the container (11) through the supply passage (44).

The oxygen exhaust passage (45) has one end connected to an outlet port of the oxygen tank (39), and the other end open in a space outside the container (11). The oxygen-enriched air retained in the oxygen tank (39) is exhausted into the space outside the container (11) through the oxygen exhaust passage (45).

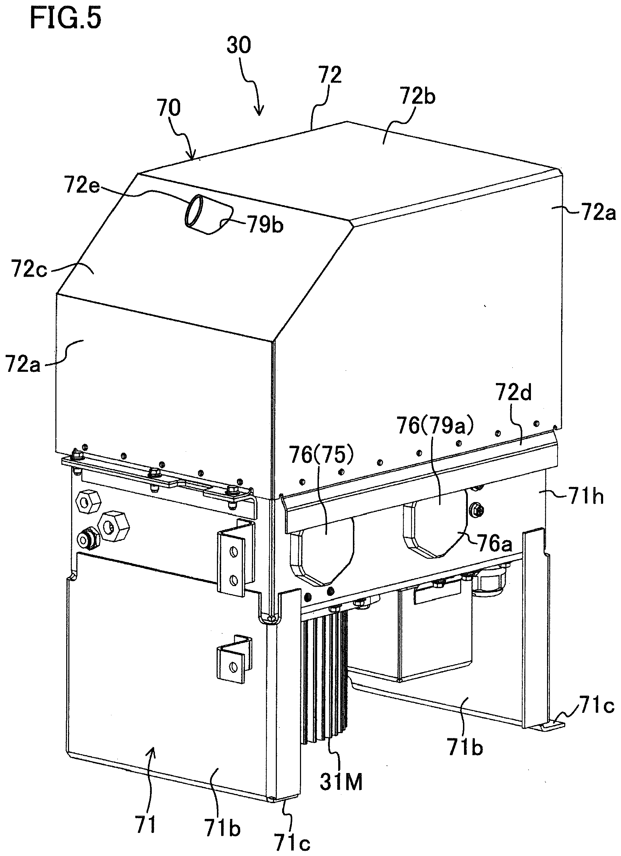

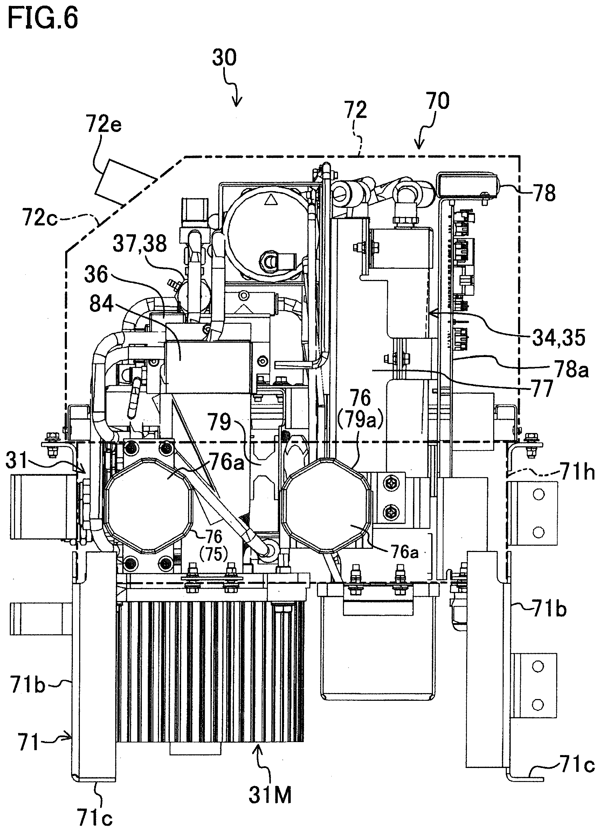

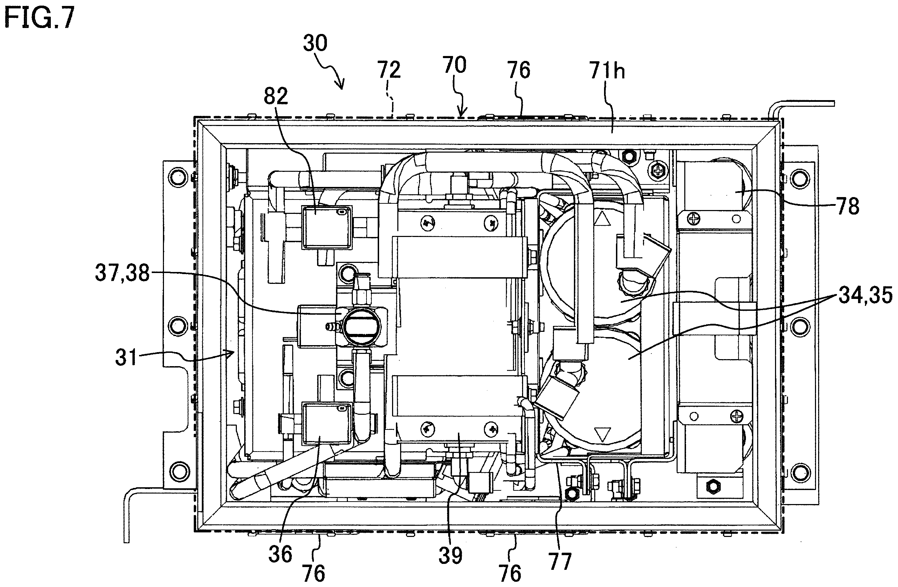

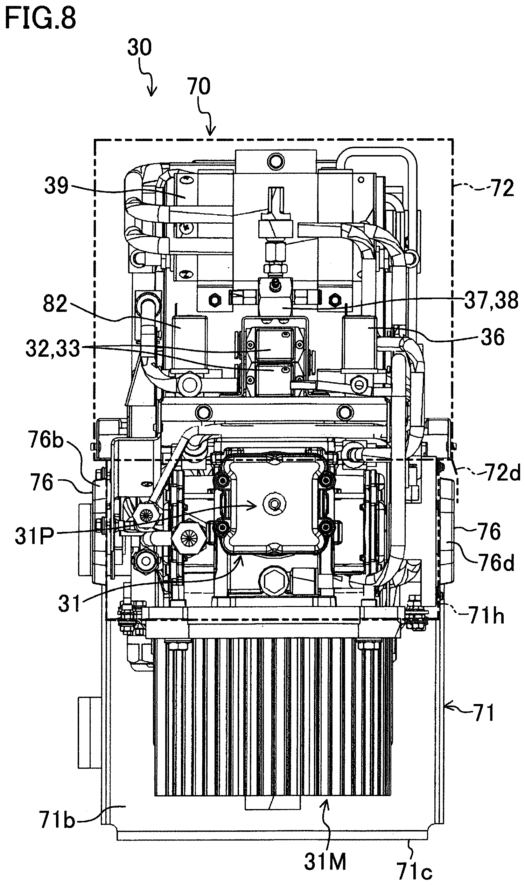

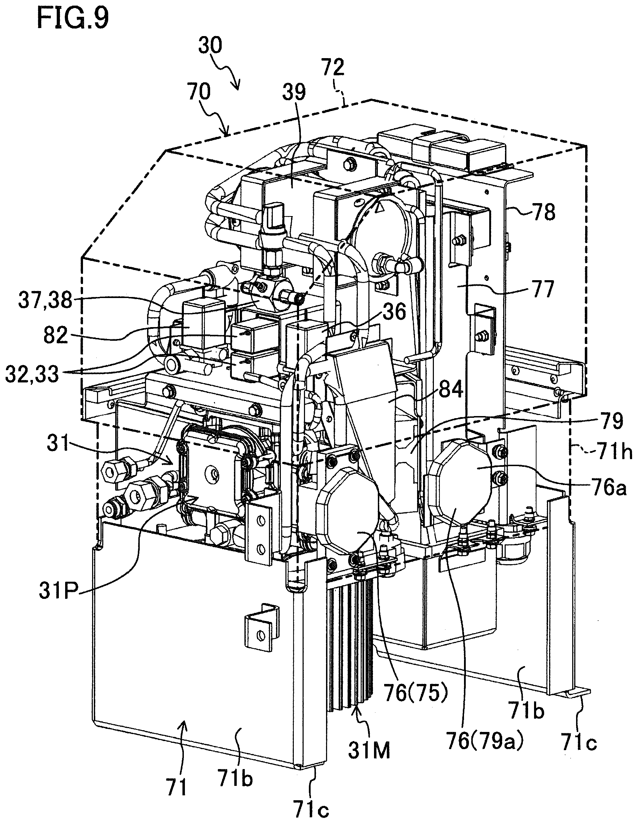

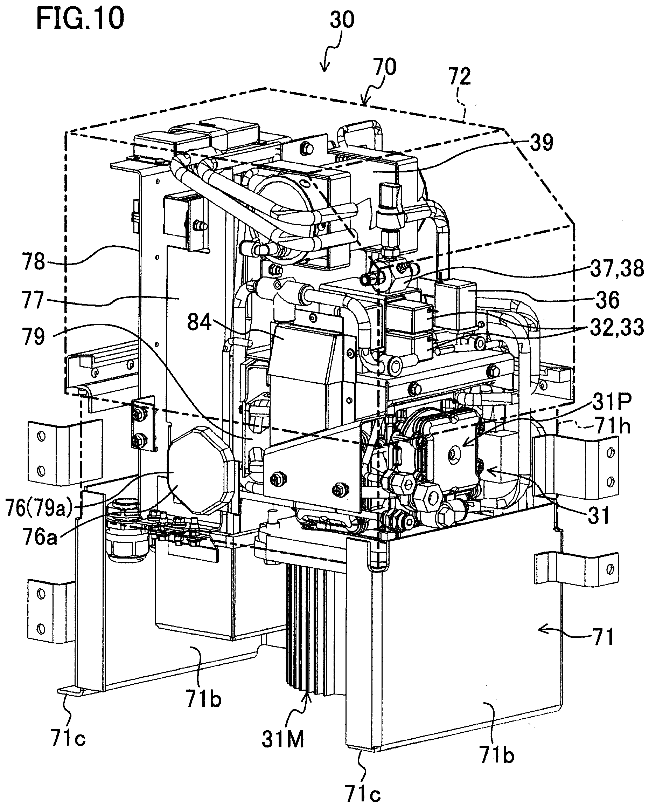

Next, the mechanical structure of the gas supply device (30) will be specifically described. FIGS. 5-10 illustrate the gas supply device (30). FIG. 5 is a perspective view illustrating an appearance of the gas supply device. FIG. 6 is a front view of the gas supply device, and illustrates, with solid lines, how internal components of the gas supply device are arranged in the unit case (70). FIG. 7 is a plan view of the gas supply device, and illustrates, with solid lines, how internal components of the gas supply device are arranged in the unit case (70). FIG. 8 is a left side view of the gas supply device, and illustrates, with solid lines, how internal components of the gas supply device are arranged in the unit case (70). FIG. 9 is a front perspective view of the gas supply device, and illustrates, with solid lines, how internal components of the gas supply device are arranged in the unit case (70). FIG. 10 is a rear perspective view of the gas supply device, and illustrates, with solid lines, how internal components of the gas supply device are arranged in the unit case (70).

As illustrated in FIGS. 5 and 6, the unit case (70) has the shape of a hollow rectangular parallelepiped as a whole. The unit case (70) includes a base (71) and a cover (72). The base (71) includes, as illustrated in FIGS. 5 and 6, a prism-shaped support (71h) having a bottom and supporting internal components of the gas supply device (30), leg plates (71b) attached to left and right ends of the support (71h) and extending downward, and attachment plates (71 c) each extending rightward from the bottom of an associated one of the leg plates (71b).

The cover (72) has four side panels (72a), and a top panel (72b) closing respective upper ends of the side panels (72a). One end of the top panel (72b) (i.e., the left end in FIG. 6) is a tilted portion (72c) which is tilted downward and outward. The bottom of the cover (72) is attached to the top of the base (71). In the unit case (70), the space enclosed by the support (71h) and the cover (72) functions as a waterproof, and airtight component housing space.

The tilted portion (72c) has an upper end portion having a cooling air outlet port (79b) in a middle portion of the tilted portion (72c) in a front-to-rear direction. The cooling air outlet port (79b) is a circular hole which passes through the tilted portion (72c) along the thickness thereof. A circular cylindrical connection portion (72e) is inserted into, and fixed into, the cooling air outlet port (79b). In other words, the connection portion (72e) is provided for the tilted portion (72c). In addition, the connection portion (72e) is disposed in a space defined by a plane including the top panel (72b), a plane including the left side panel (72a), and the tilted portion (72c) (i.e., a triangular-prism-shaped space extending in the front-to-rear direction.

As illustrated in FIGS. 5 and 10, front and rear side surfaces of the support (71h) are provided with permeable, waterproof membrane filters (76). The unit case (70) is provided with the air inlet port (75) which allows the air pump (31) to suck air, as illustrated in FIG. 4. The unit case (70) is also provided with cooling air inlet ports (79a) which each allow an associated one of the cooling fans (79) to suck air into the unit case (70). The air inlet port (75) is provided at a left end of a front side of the support (71h), and the cooling air inlet ports (79a) are provided on a middle portion of the front and rear sides of the support (71h) (see, e.g., FIGS. 9 and 10). The membrane filters (76) are fitted into the air inlet port (75) and cooling air inlet ports (79a).

The membrane filters (76) are permeable as stated above. Thus, activation of the air pump (31) allows air to be sucked through the membrane filters (76). Actuation of the cooling fans (79) allows air to be sucked into the unit case (70) through the membrane filters (76). On the other hand, each membrane filter (76) is waterproof and does not allow moisture to pass therethrough. Thus, no moisture enters the unit case (70). Examples of the membrane filters (76) include a vent filter manufactured by W. L. Gore & Associates.

A side surface of the unit case (70) is provided with a filter cover (72d) covering upper parts of the two membrane filters (76) on a front side, as illustrated in FIGS. 5 and 8. This filter cover (72d) prevents the membrane filters (76) from being splashed with sea water from above or collecting dust. The filter cover (72d) is provided at the bottom of the front side panel (72a) of the cover (72) so as to tilt outward and extend downward.

As described above, the component housing space for housing the components of the gas supply device (30) is formed inside the unit case (70) formed by assembling the base (71) and the cover (72) together. As illustrated in FIGS. 6-10, the unit case (70) is provided with components such as a pump mechanism (31P) of the air pump (31), the two cooling fans (79), the first and second directional control valves (32) and (33), the first and second adsorption columns (34) and (35), the purge valve (36), the first and second check valves (37) and (38), and the oxygen tank (39). All components in the unit case (70) are connected together through pipes (not shown) in accordance with the piping system diagram in FIG. 4. The cover (72) of the unit case (70) is provided with an outlet port for nitrogen-enriched air and an outlet port for oxygen gas. The first and second adsorption columns (34, 35) each constitute a generator.

In FIGS. 6, 7, and 9, the air pump (31) is disposed at a location closer to a left end of an internal space of the unit case (70). In FIGS. 6, 7, and 9, the first and second adsorption columns (34) and (35) are disposed at a location closer to a right end of the internal space of the unit case (70), and are housed in one housing case (77) such that the columns (34) and (35) extend vertically. The air pump (31) includes the pump mechanism (31P) which sucks air through the suction port and discharges the air through the discharge port, and a motor (31 M) coupled to the pump mechanism (31 P) to drive the pump mechanism (31 P). The pump mechanism (31 P) is disposed under the tilted portion (72c). The motor (31M) of the air pump (31) is attached to the unit case (70) so as to protrude downward from the lower surface of the support (71h). At least one portion of the motor (31M) is located outside the unit case (70).

The cooling fans (79) are disposed one each near, and provided one each for, each of the two cooling air inlet ports (79a) on the front and rear sides. In the present embodiment, each cooling air inlet port (79a) is located near a space on the suction side of an associated one of the cooling fans (79). Each cooling fan (79) is configured to send air which has flowed into the unit case (70) through the associated cooling air inlet port (79a) toward the pump mechanism (31 P) of the air pump (31).

Part of the air which has been blown out by the cooling fan (79) passes through a branch duct (84) (see FIGS. 9 and 10) provided in the unit case (70), and is introduced into a space above the pump mechanism (31P). This branch duct (84) has the shape of a flat tube, and has one end open downstream of the cooling fan (79), and the other end open in the space over the pump mechanism (31P). In the space above the pump mechanism (31 P) (i.e., the space under the tilted portion (72c)), the electrical components such as the first and second directional control valves (32, 33), the purge valve (36), and a measurement on-off valve (82) are disposed, and are cooled by the air which has flowed out from the branch duct (84). In the present embodiment, no electrical component is disposed under the lower end of the tilted portion (72c) (the left end in FIG. 6). It is recommended to allow about one-third of the air which has been blown out by each cooling fan (79) to flow into the branch duct (84). The branch duct (84) constitutes a branch member.

The pump mechanism (31P) of the air pump (31) has the suction port connected to the air inlet port (75) through the suction pipe (41), and the discharge port connected to the first and second adsorption columns (34) and (35) through the first and second directional control valves (32) and (33). As described above, the air pump (31) includes the pressurization portion (31a) and the depressurization portion (31b). The pressurization portion (31 a) pressurizes one of the first and second adsorption columns (34) and (35) by supplying the one adsorption column with air to perform an adsorption operation for adsorbing a nitrogen component in the air onto the associated adsorbent. The depressurization portion (31b) depressurizes the other of the first and second adsorption columns (34) and (35) by sucking air from the other adsorption column to perform a desorption operation for desorbing a nitrogen component from the associated adsorbent.

The unit case (70) is provided with, in addition to the air inlet port (75) supplying the air pump (31) with the air, an outlet port (not illustrated) delivering the nitrogen-enriched air from the first and second adsorption columns (34) and (35). In the unit case (70), the first and second directional control valves (32, 33) are provided as switchers to interchange between the first and second adsorption columns (34) and (35) to perform the adsorption and desorption operations. An electrical component module (78) having a control board (78a) is disposed on the right side of the first and second adsorption columns (34, 35) in the unit case (70).

Having such a configuration, the gas supply device (30) of this embodiment may be attached later to the external storage space (S1) of the container refrigeration apparatus (10). In this case, pipes for supplying the nitrogen-enriched air into the container (11) are connected between the gas supply device (30) and the container (11).

### [Access Door Unit]

As described above, the access door unit (40) includes the first access door (16A), the exhaust portion (46) exhausting air out of the container (11), and the intake portion (47) introducing outside air into the container (11). The exhaust portion (46) includes an exhaust duct (46a) through which the interior and exterior of the container (11) are connected together, and an exhaust valve (46b) connected to the exhaust duct (46a). The intake portion (47) includes an intake duct (47a) through which the interior and exterior of the container (11) are connected together, and an intake valve (47b) connected to the intake duct (47a). The exhaust and intake ducts (46a) and (47a) are both formed inside the first access door (16A) including exterior and interior walls and a thermal insulator.

### [Sensor Unit]

The sensor unit (50) is provided in the second space (S22) which is the blowout side of the interior fan (26) in the internal storage space (S2). The sensor unit (50) includes an oxygen sensor (51), a carbon dioxide sensor (52), a fixing plate (53), a membrane filter (54), a connection pipe (56), and an exhaust pipe (57).

The oxygen sensor (51) includes an oxygen sensor box (51a), and measures the oxygen concentration of gas in the oxygen sensor box (51a). The oxygen sensor box (51a) is fixed to the fixing plate (53). An outer surface of the oxygen sensor box (51a) has an opening to which the membrane filter (54) is attached. The oxygen sensor box (51a) is coupled to a branch pipe (81) of the measurement unit (80), which will be described later, and the connection pipe (56).

The carbon dioxide sensor (52) includes a carbon dioxide sensor box (52a), and measures the carbon dioxide concentration of gas in the carbon dioxide sensor box (52a). The carbon dioxide sensor box (52a) is coupled to the connection pipe (56) and the exhaust pipe (57).

The membrane filter (54) is a permeable, waterproof filter. The membrane filter (54) allows the second space (S22) of the internal storage space (S2) to communicate with the internal space of the oxygen sensor box (51 a), and prevents, when the gas passes from the second space (S22) to the internal space of the oxygen sensor box (51 a), moisture in the gas from entering the internal space.

The connection pipe (56) is, as described above, coupled to the oxygen sensor box (51 a) and the carbon dioxide sensor box (52a), and allows the internal space of the oxygen sensor box (51 a) to communicate with the internal space of the carbon dioxide sensor box (52a).

The exhaust pipe (57) has one end coupled to the carbon dioxide sensor box (52a), as described above, and the other end open near the suction port of the interior fan (26). In other words, the exhaust pipe (57) allows the internal space of the carbon dioxide sensor box (52a) to communicate with the first space (S21) of the internal storage space (S2).

As can be seen, the internal spaces of the oxygen sensor box (51a) and carbon dioxide sensor box (52a) communicate with each other through the connection pipe (56), the internal space of the oxygen sensor box (51a) communicates with the second space (S22) of the internal storage space (S2) through the membrane filter (54), and the internal space of the carbon dioxide sensor box (52a) communicates with the first space (S21) of the internal storage space (S2) through the exhaust pipe (57). In other words, the second space (S22) and first space (S21) of the internal storage space (S2) communicate with each other through the membrane filter (54), the internal space of the oxygen sensor box (51 a), the connection pipe (56), the internal space of the carbon dioxide sensor box (52a), and the exhaust pipe (57). When the interior fan (26) is operated, the pressure of the first space (S21) becomes lower than that of the second space (S22), and thus, the air in the second space (S22) passes through the oxygen sensor (51) and the carbon dioxide sensor (52) in this order.

### [Measurement Unit]

The measurement unit (80) includes the branch pipe (81) and the measurement on-off valve (82), and is configured to divide, and guide to the oxygen sensor (51), part of nitrogen-enriched air produced in the gas supply device (30) and passing through the supply passage (44).

Specifically, the branch pipe (81) has one end connected to the supply passage (44), and the other end coupled to the oxygen sensor box (51a) of the oxygen sensor (51). According to this configuration, the branch pipe (81) allows the supply passage (44) to communicate with the internal space of the oxygen sensor box (51a). In the present embodiment, the branch pipe (81) branches from the supply passage (44) in the unit case (70) and extends from the interior to the exterior of the unit case (70).

The measurement on-off valve (82) is provided for the branch pipe (81) in the unit case (70) to open and close the branch pipe (81). The opening/closing operation of the measurement on-off valve (82) is controlled by the concentration controller (55).

### [Concentration Controller]

The concentration controller (55) is configured to perform a concentration control operation for controlling the oxygen concentration and carbon dioxide concentration of the air in the container (11) to desired concentrations, respectively. Specifically, the concentration controller (55) controls the operation of the gas supply device (30), intake portion (47), and exhaust portion (46) based on measurement results obtained by the oxygen sensor (51) and the carbon dioxide sensor (52) so that the oxygen concentration and carbon dioxide concentration of the air in the container (11) are controlled to respective desired concentrations (e.g., 5 % oxygen and 5 % carbon dioxide).

### [Exhaust Tube]

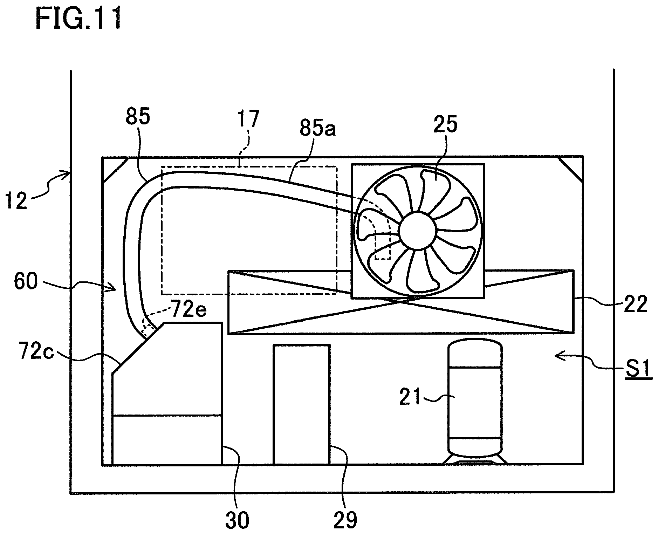

The exhaust tube (85) allows the unit case (70) to be connected to a space on the suction side of the exterior fan (25). As illustrated in FIG. 11, the exhaust tube (85) is an elongate flexible tube, and has an inlet end fitted onto, and connected to, the connection portion (72e). In other words, the inlet end of the exhaust tube (85) is connected to the cooling air outlet port (79b). The exhaust tube (85) extends toward the top of the unit case (70), and then extends gradually downward toward its right end (i.e., from the inlet side toward the outlet side). In other words, a portion of the exhaust tube (85) from its intermediate point to its outlet end extends downward toward the outlet end. The outlet end of the exhaust tube (85) is open downward toward the space on the suction side of the exterior fan (25) (the back surface of the exterior fan (25) in the present embodiment). The exhaust tube (85) forms an exhaust passage. A portion of the exhaust tube (85) extending gradually downward toward its right end as described above forms a downwardly extending portion (85a) for preventing seawater and other liquids from entering the unit case (70) through the exhaust tube (85).

As illustrated in FIG. 11, the unit case (70) of the gas supply device (30) is spaced apart from the exterior fan (25) in the external storage space (S1). Thus, during operation of the exterior fan (25), the space on the suction side of the exterior fan (25) has a lower pressure than a space where the unit case (70) is disposed. In other words, the space in which the outlet end of the exhaust tube (85) is open has a lower pressure than the space in which the cooling air inlet ports (79a) are located. Thus, during operation of the exterior fan (25), this pressure difference causes outside air to flow through the cooling air inlet ports (79a) into the unit case (70), to flow through a region surrounding the air pump (31) and other components, and then to flow through the cooling air outlet port (79b) out of the outlet end of the exhaust tube (85) toward the space on the suction side of the exterior fan (25). That is to say, the air in the unit case (70) is sucked out of the cooling air outlet port (79b) by the exterior fan (25).

### -Operations-

### <Cooling Operation>

In the present embodiment, the temperature controller (100) shown in FIG. 3 performs a cooling operation for cooling the air in the container (11).

During the cooling operation, the temperature controller (100) controls the operations of the compressor (21), the expansion valve (23), and the exterior and interior fans (25) and (26) based on measurement result provided by a temperature sensor (not shown) so that the air in the container reaches a desired target temperature. In this case, the refrigerant circuit (20) allows a refrigerant to circulate therethrough, and performs a vapor compression refrigeration cycle. The air in the container (11) guided to the evaporator (24) by the interior fans (26) is cooled by the refrigerant flowing through the evaporator (24). The air cooled in the evaporator (24) passes through the underfloor path (19a), and is blown through the blowout port (18b) back into the container (11). Thus, the air in the container (11) is cooled.

### <Concentration Control Operation>

Further, in the present embodiment, the concentration controller (55) shown in FIG. 4 performs a concentration control operation for controlling the oxygen concentration and carbon dioxide concentration of the air in the container (11) to predetermined target concentrations (e.g., 5% oxygen and 5% carbon dioxide), respectively. During the concentration control operation, the concentration controller (55) controls the operations of the gas supply device (30), the intake portion (47), and the exhaust portion (46) based on the measurement results provided by the oxygen sensor (51) and carbon dioxide sensor (52) so that the oxygen concentration and carbon dioxide concentration of the air in the container (11) reach the desired target concentrations. The concentration controller (55) instructs the measurement on-off valve (82) to close. This allows the oxygen sensor (51) and the carbon dioxide sensor (52) to be supplied with the air in the container by the interior fans (26) and to respectively measure the oxygen and carbon dioxide concentrations of the air in the container. It will now be described in detail how the oxygen and carbon dioxide concentrations are controlled.

### «Control of Oxygen Concentration»

First, the concentration controller (55) determines whether the oxygen concentration of the air in the container measured by the oxygen sensor (51) is higher than that of the nitrogen-enriched air (containing 10% oxygen). If the concentration controller (55) determines that the oxygen concentration of the air in the container is higher than that of the nitrogen-enriched air, the concentration controller (55) allows the gas supply device (30) to start operating. Thus, the nitrogen-enriched air (consisting of 90% nitrogen and 10% oxygen) is produced in the gas supply device (30), and supplied into the container (11). That is to say, an operation for reducing the oxygen concentration of the air in the container (11) is performed.

Thereafter, the concentration controller (55) determines whether the oxygen concentration measured by the oxygen sensor (51) has decreased to be equal to or less than the oxygen concentration of the nitrogen-enriched air (containing 10% oxygen). If the concentration controller (55) determines that the oxygen concentration of the air in the container has decreased to be equal to or less than that of the nitrogen-enriched air, the concentration controller (55) allows the gas supply device (30) to stop operating. That is to say, supply of the nitrogen-enriched air is stopped.

Plants (15) stored in the container (11) perform respiration. Thus, the plants (15) always absorb oxygen and release carbon dioxide inside the container (11). Thus, even if the nitrogen-enriched air stops being supplied into the container (11), the oxygen concentration of the air in the container (11) keeps decreasing.

Next, the concentration controller (55) determines whether the oxygen concentration in the air in the container measured by the oxygen sensor (51) has decreased to be less than a target oxygen concentration (5%). If the concentration controller (55) determines that the oxygen concentration in the air in the container has decreased to be less than the target concentration, the gas supply device (30) resumes operating. Alternatively, the intake valve (47b) of the intake portion (47) is opened and outside air having a higher oxygen concentration than the nitrogen-enriched air is taken through the intake duct (47a) into the container (11). That is to say, to increase the oxygen concentration of the air in the container (11), an operation for supplying the nitrogen-enriched air into the container (11) is resumed, or alternatively, an intake operation for taking the outside air into the container (11) is performed. Note that the supply of the nitrogen-enriched air and the intake of the outside air may be performed simultaneously. An exhaust operation for exhausting the inside air out of the container through the exhaust duct (46a) with the exhaust valve (46b) of the exhaust portion (46) open may be performed together with the supply of the nitrogen-enriched air and/or the intake of the outside air.

Thereafter, the series of process steps described above is repeatedly performed all over again. Such process steps allow the oxygen concentration of the air in the container (11) to be controlled to a concentration between the target concentration (5%) and the oxygen concentration of the nitrogen-enriched air produced by the gas supply device (30) (10%).

In the present embodiment, if the plants (15) are bananas, the target concentration of oxygen is set to be 5%. If the plants (15) are avocados, however, it is recommended that the target concentration be set to be 3%.

### «Control of Carbon Dioxide Concentration»

First, the concentration controller (55) determines whether the carbon dioxide concentration of the air in the container measured by the carbon dioxide sensor (52) is higher than a predetermined target concentration (5%). If the concentration controller (55) determines that the carbon dioxide concentration of the air in the container is higher than the target concentration, the concentration controller (55) allows the gas supply device (30) to start operating. As a result, the nitrogen-enriched air (consisting of 90% nitrogen and 10% oxygen) is supplied into the container (11). Alternatively, the exhaust valve (46b) of the exhaust portion (46) is opened and the air in the container (11) is exhausted through the exhaust duct (46a) out of the container. That is to say, to reduce the carbon dioxide concentration of the air in the container (11), an operation for supplying the nitrogen-enriched air into the container (11) is started, or alternatively, an exhaust operation for exhausting the air out of the container (11) is performed. In this case, the supply of the nitrogen-enriched air and the exhaustion of the air may be performed simultaneously. An intake operation for taking outside air, which has a lower carbon dioxide concentration (0.03%) than inside air, through the intake duct (47a) into the container with the intake valve (47b) of the intake portion (47) open may be performed together with the supply of the nitrogen-enriched air and/or the exhaustion of air.

### Next, the concentration controller (55) determines whether the carbon dioxide concentration of the air in the container measured by the carbon dioxide sensor (52) has decreased to be equal to or less than the target concentration. If the concentration controller (55) determines that the carbon dioxide concentration of the air in the container has decreased to be equal to or less than the target concentration, the operation of the gas supply device (30) or the exhaustion of the air is stopped.

Thereafter, the series of process steps described above is performed all over again. Such process steps allow the carbon dioxide concentration of the air in the container (11) to be controlled to the target concentration (5%).

In the present embodiment, if the plants (15) are bananas, the target concentration of carbon dioxide is set to be 5%. If the plants (15) are avocados, it is recommended that the target concentration be set to be 10%.

### -Advantages of Embodiment-

In the container refrigeration apparatus (10) of the present embodiment, the outlet end of the exhaust tube (85) connected to the cooling air outlet port (79b) is open toward the space on the suction side of the exterior fan (25). Thus, the air in the unit case (70) is sucked out of the cooling air outlet port (79b) through the exhaust tube (85). This produces an air flow from the cooling air inlet port (79a) through the unit case (70) toward the cooling air outlet port (79b). Heat generated by the pump mechanism (31P) joins the air flow, and is released through the cooling air outlet port (79b) out of the unit case (70). This air flow is produced by the exterior fan (25) for supplying the outside air to the radiator (22). Thus, while the exhaust tube (85) needs to be provided to solve the problem of heat, an additional component such as a fan does not have to be provided. Thus, heat may be released from the gas supply device (30) at low cost.

In addition, the connection portion (72e) is disposed in a space defined by the plane including the top panel (72b), the plane including the left side panel (72a), and the tilted portion (72c). As can be seen, a space near the tilted portion (72c) may be used to provide the connection portion (72e) to which the exhaust tube (85) is connected. This may save space occupied by the gas supply device (30).

This point will now be described in detail. As illustrated in FIG. 11, the container refrigeration apparatus (10) of the present embodiment includes the gas supply device (30) disposed in the lower left corner of the external storage space (S1). Thus, if provided on the left side panel (72a) of the unit case (70), the connection portion (72e) could not be connected to the exhaust tube (85). If provided on a horizontal portion of the top panel (72b), the connection portion (72e) would protrude from the top panel (72b), and would increase the height of the unit case (70). In contrast, in the gas supply device (30) of the present embodiment, the connection portion (72e) is provided on the tilted portion (72c) of the unit case (70). Thus, the connection portion (72e) may be provided without increasing the height of the unit case (70). In addition, the space above the tilted portion (72c) may be used to connect the exhaust tube (85) to the connection portion (72e). As can be seen from the foregoing description, the present embodiment may reduce the height of the gas supply device (30), and allows this gas supply device (30) to be disposed immediately adjacent to the left side surface of the external storage space (S1) and to be reliably disposed in the relatively narrow external storage space (S1).

In addition, the pump mechanism (31P) may be cooled by the cooling fans (79), thereby more effectively solving the problem of heat.

Since the cooling air inlet ports (79a) are located in the space on the suction side of the cooling fans (79), the cooling fans (79) further accelerate the air flow from the cooling air inlet ports (79a) through the unit case (70) toward the cooling air outlet port (79b), thereby facilitating the transfer of heat to the air flowing from the pump mechanism (31 P) through the unit case (70). Thus, the problem of heat may be solved more effectively.

The inlet end of the exhaust tube (85) is fitted onto the connection portion (72e) protruding from the tilted portion (72c). Thus, even if seawater and another liquid flow along the outer surface of the tilted portion (72c), the liquid cannot enter the unit case (70) through the gap between the exhaust tube (85) and the connection portion (72e). This may prevent electrical components and other components in the unit case (70) from being adversely affected.

The exhaust tube (85) has the downwardly extending portion (85a) extending gradually downward toward the outlet end of the exhaust tube (85). The outlet end of the exhaust tube (85) has an opening facing downward. Thus, even if seawater and another liquid enter the exhaust tube (85) through the outlet end of the exhaust tube (85), the liquid flow through the downwardly extending portion (85a) due to gravity and are discharged from the outlet end of the exhaust tube (85). This may prevent seawater and other liquids from entering the unit case (70) through the exhaust tube (85) and adversely affecting electrical components and other components in the unit case (70).

If the outside air has a low temperature, condensation may occur on the inner surface of the unit case (70). In the present embodiment, if condensation occurs on the inner surface of the tilted portion (72c), water thus condensed flows along the tilted portion (72c) to the lower end of the tilted portion. In addition, no electrical component is disposed under the lower end of the tilted portion (72c). Thus, no condensed water can drip on electrical components, such as the first and second directional control valves (32, 33), disposed under the tilted portion (72c). This may prevent the condensed water from causing the electrical components to break down.

The lower end of the tilted portion (72c) is continuous with the side panel (72a) of the cover (72). Thus, the condensed water produced on the inner surface of the tilted portion (72c) flows along the tilted portion (72c), and then runs down along the side panel (72a). Thus, the condensed water cannot drip from the tilted portion (72c) and splash onto the bottom surface or any other surface of the unit case (70). This may reliably prevent the condensed water from causing electrical components to break down.

Since the pump mechanism (31P) generating heat by compressing air is disposed under the tilted portion (72c), the heat generated by the pump mechanism (31P) heats the air near the tilted portion (72c), thereby making it difficult for condensation to occur on the tilted portion (72c). This may reliably prevent the condensed water from causing electrical components under the tilted portion (72c) to break down.

Part of the air which has been blown out by the cooling fans (79) is guided through the branch duct (84) to a space where electrical components, such as the first and second directional control valves (32, 33), are disposed. That is to say, the air which has been blown out by the cooling fans (79) may be used to cool not only the pump mechanism (31 P) but also the electrical components. Thus, the problem of heat generated by the electrical components may be solved at low cost.

### -First Variation of Embodiment-

A first variation of the embodiment will now be described. In a container refrigeration apparatus (10) according to the present variation, heat insulating gaskets (83) are provided in a unit case (70) of a gas supply device (30) to prevent high-temperature air from reaching an electrical component module (78). The heat insulating gaskets (83) each constitute a heat insulating portion.

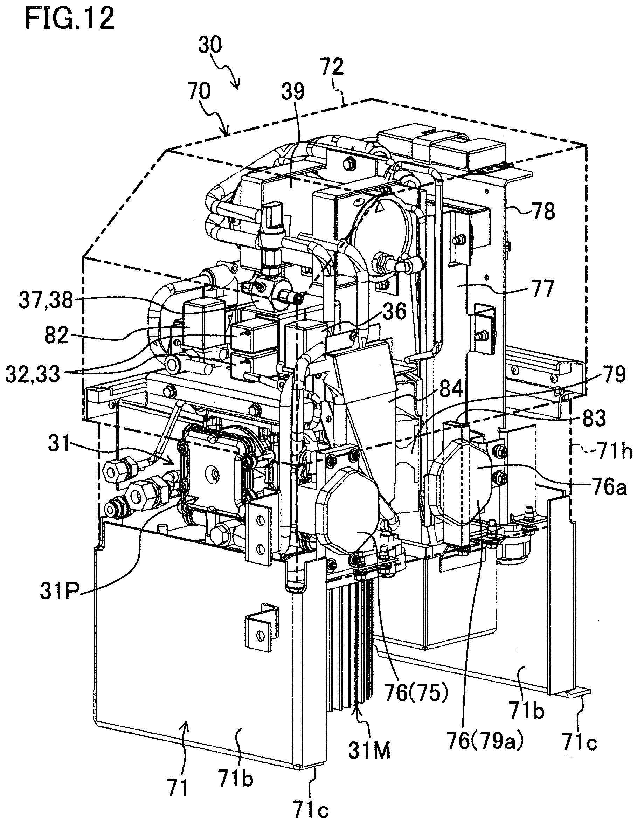

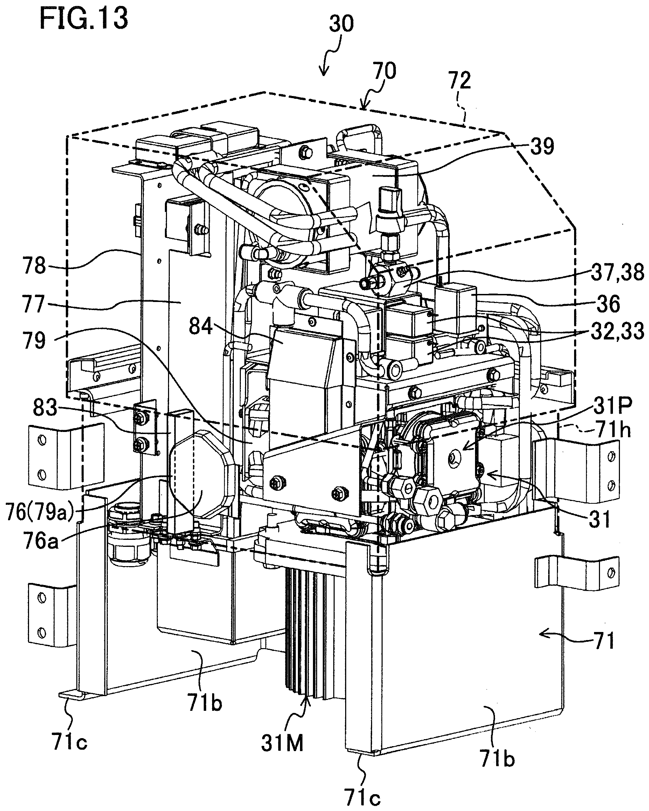

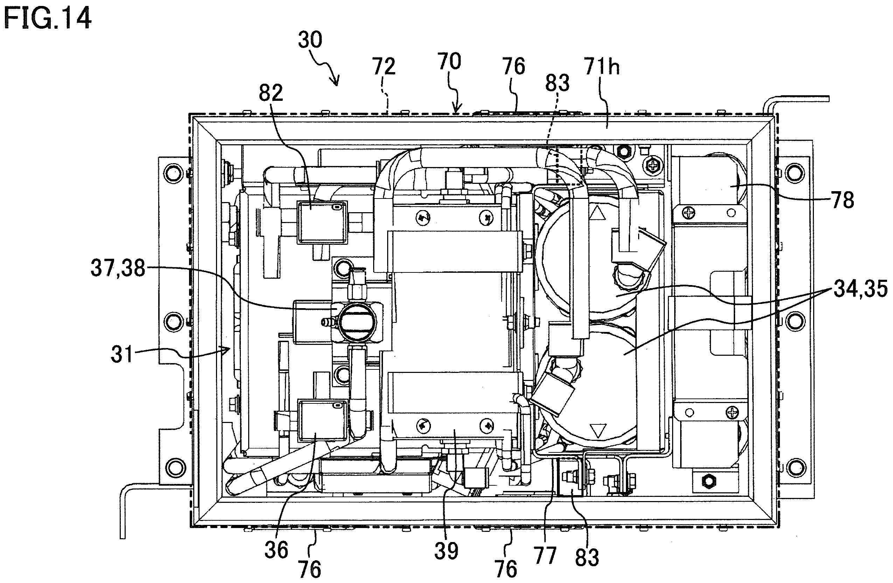

As illustrated in FIGS. 12, 13, and 14, the heat insulating gaskets (83) are each made of an elastic material, which has the shape of an elongate rectangular parallelepiped. Each heat insulating gasket (83) is disposed between an associated one of cooling fans (79) and the electrical component module (78). The heat insulating gaskets (83) do not hinder the air from flowing from the cooling air inlet ports (79a) toward the cooling fans (79) but are located to hinder the air from flowing from the pump mechanism (31P) toward the electrical component module (78). Specifically, the heat insulating gaskets (83) are fixed between a side surface of a housing case (77) in which first and second adsorption columns (34, 35) are housed and an inner surface of a support (71h) so as to extend vertically. Each heat insulating gasket (83) has a lower end surface coming into contact with the bottom surface of the support (71h), and an upper end surface located at substantially the same level as the upper end of the support (71h). That is to say, the heat insulating gaskets (83) close a space between the front surface of the housing case (77) and the support (71h) and a space between the back surface of the housing case (77) and the support (71h), respectively.

After having cooled the pump mechanism (31P), the air sent from the cooling fans (79) to the pump mechanism (31P) mostly flows out of the unit case (70) through the cooling air outlet port (79b) as it is, but a part of the air may flow back to the cooling fans (79). The air that has flowed back absorbs heat generated by the pump mechanism (31P), and thus has a relatively high temperature. Thus, if the air that has flowed back reaches the electrical component module (78), the control board (78a) and other components are heated. This may cause the control board (78a) and other components to malfunction or to break down.

To address this problem, in the present variation, the heat insulating gaskets (83) obstruct the air flow from the pump mechanism (31P) toward the electrical component module (78) as described above. Thus, the heat insulating gaskets (83) may obstruct a flow of the air that has absorbed heat generated by the pump mechanism (31P) toward the electrical component module (78). Thus, the provision of the heat insulating gaskets (83) may prevent the heat generated by the pump mechanism (31 P) from causing the control board (78a) and other components to malfunction or to break down.

Each heat insulating gasket (83) according to the present variation has an upper end surface located at substantially the same level as the upper end of the support (71h). However, this is merely an example of the present invention. For example, the heat insulating gaskets (83) may each have the upper end surface coming into contact with a top panel (72b) of a cover (72), while each having a lower end surface coming into contact with the bottom surface of the support (71h). In this case, the heat insulating gaskets (83) extend across the internal space of the unit case (70) in the height direction thereof, thereby further reducing the air flow from the pump mechanism (31 P) toward the electrical component module (78).

### -Second Variation of Embodiment-

A second variation of the embodiment will now be described. In a container refrigeration apparatus (10) according to the present variation, the shape of a tilted portion (72c) of a unit case (70) of a gas supply device (30) has a different shape from that in the embodiment.

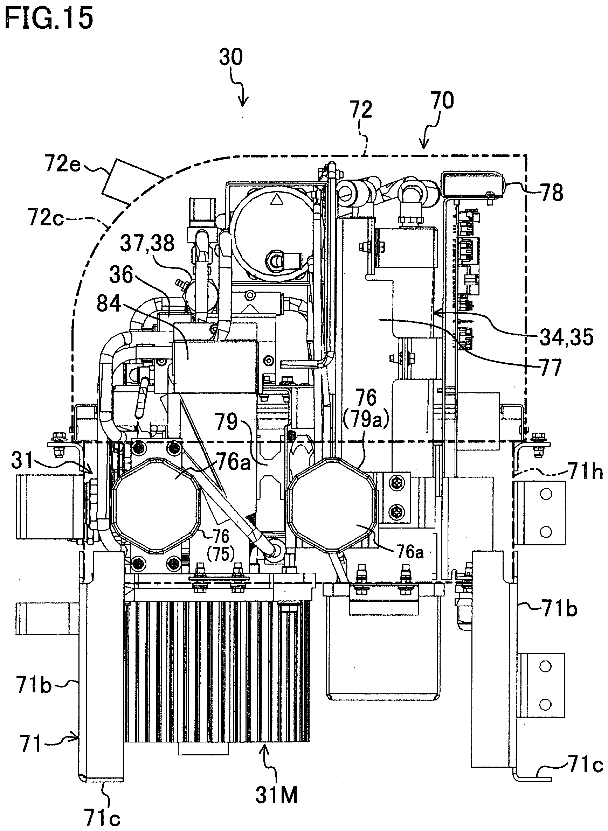

As illustrated in FIG. 15, one end portion of a top panel (72b) (the left end portion illustrated in FIG. 15) smoothly transits into the tilted portion (72c), which is rounded and tilted so as to descend toward its outer end (its left end illustrated in FIG. 15). Electrical components such as first and second directional control valves (32, 33), a purge valve (36), and a measurement on-off valve (82) are disposed in a space under the tilted portion (72c).

Also in the container refrigeration apparatus (10) according to the present variation, condensed water produced on the tilted portion (72c) flows along the inner surface of the tilted portion (72c) without dripping downward, and then runs down along a side panel (72a) continuous with the lower end of the tilted portion (72c).

### «Other Embodiments»

In the foregoing embodiment, the outlet end of the exhaust tube (85) is open in the space on the suction side of the exterior fan (25). However, this is merely an example of the present invention. As long as the air is sucked out of the unit case (70) by the exterior fan (25), the outlet end of the exhaust tube (85) may be open at a location somewhat away from the exterior fan (25). For example, in the container refrigeration apparatus (10) according to the foregoing embodiment, the exterior fan (25) is disposed downstream of the radiator (22) in the external storage space (S1). Thus, the outlet end of the exhaust tube (85) merely needs to be open in a space between the radiator (22) and the exterior fan (25).

In the foregoing embodiment, the branch duct (84) is configured as a branch member. However, this is merely an example of the present invention. The branch member merely needs to guide part of the air blown out by the cooling fans (79) to a space including the electrical components such as the first and second directional control valves (32, 33). For example, a plate-like member may be configured as the branch member.

In the foregoing embodiment, the heat insulating gaskets (83) each made of a cuboid elastic material are configured as heat insulating portions. However, this is merely an example of the present invention. As long as each heat insulating portion prevents the air that has an increased temperature as a result of cooling the pump mechanism (31 P) from flowing into a space near the electrical component module (78), the heat insulating portion may have any other shape, and may be made of any other material. The heat insulating portion may be integrated with any one of the components disposed in the unit case (70).

In the foregoing embodiment, the air pump (31) has the pressurization portion (31a) and the depressurization portion (31b), and the depressurization portion (31b) of the air pump (31) sucks nitrogen-enriched air. However, a suction pump sucking the nitrogen-enriched air may be provided separately.

Also, although two adsorption columns, namely, the first and second adsorption columns (34) and (35), are used to adsorb/desorb nitrogen in the foregoing embodiment, the number of the adsorption columns is not limited to two. For example, six adsorption columns may be used as well.

### INDUSTRIAL APPLICABILITY

As can be seen from the foregoing description, the present invention is useful for a container refrigeration apparatus.

### DESCRIPTION OF REFERENCE CHARACTERS

- 10: Container Refrigeration Apparatus
- 11: Container
- 20: Refrigerant Circuit
- 22: Radiator
- 24: Evaporator
- 25: Exterior Fan
- 26: Interior Fan
- 30: Gas Supply Device
- 31P: Pump Mechanism
- 32: First Directional Control Valve (Electrical Component)
- 33: Second Directional Control Valve (Electrical Component)
- 34: First Adsorption Column (Producer)
- 35: Second Adsorption Column (Producer)
- 36: Purge Valve (Electrical Component)
- 70: Unit Case
- 72a: Side Panel
- 72b: Top Panel
- 72c: Tilted Portion
- 72e: Connection Portion
- 79: Cooling Fan
- 79a: Cooling Air Inlet Port
- 79b: Cooling Air Outlet Port
- 82: Measurement On-Off Valve (Electrical Component)
- 84: Branch Duct (Branch Member)
- 85: Exhaust Tube (Exhaust Passage)
- 85a: Downwardly Extending Portion

## Claims

1. A container refrigeration apparatus (10) comprising:
a refrigerant circuit (20) including a radiator (22) and an evaporator (24) and performing a refrigeration cycle;
an exterior fan (25) configured to supply air outside a container to the radiator (22);
an interior fan (26) configured to supply air inside the container to the evaporator (24); and
a gas supply device (30) configured to produce nitrogen-enriched air having a higher nitrogen concentration than outside air does, and to supply the nitrogen-enriched air into the container,
the gas supply device (30) including:
a unit case (70) disposed outside the container (11) and having a cooling air inlet port (79a) and a cooling air outlet port (79b);
a pump mechanism (31P) housed in the unit case (70) and configured to suck, and compress, outside air; and
a generator (34, 35) configured to produce the nitrogen-enriched air from the compressed air discharged by the pump mechanism (31 P), wherein
the container refrigeration apparatus has an exhaust passage (85) through which the unit case (70) and a space on a suction side of the exterior fan (25) are connected together such that the exterior fan (25) sucks air through the cooling air outlet port (79b) out of the unit case (70).

2. The container refrigeration apparatus of claim 1, wherein
the exhaust passage (85) is defined by an exhaust tube (85), and
the exhaust tube (85) has an inlet end connected to the cooling air outlet port (79b), and an outlet end open in the space on the suction side of the exterior fan (25).

3. The container refrigeration apparatus of claim 2, wherein
at least one portion of the exhaust tube (85) is configured as a downwardly extending portion (85a) extending downward from a point near an inlet of the exhaust tube toward an outlet of the exhaust tube.

4. The container refrigeration apparatus of claim 2 or 3, wherein
the unit case (70) has a box shape, and includes a top panel (72b) and side panels (72a), the top panel (72b) having a tilted portion (72c) which descends toward one of the side panels (72a), and
the tilted portion (72c) is provided with a connection portion (72e) to which the exhaust tube (85) is connected.

5. The container refrigeration apparatus of claim 4, wherein
an electrical component (32, 33, 36, 82) forming the gas supply device (30) is disposed under the tilted portion (72c).

6. The container refrigeration apparatus of any one of claims 1-5, further comprising:
a cooling fan (79) housed in the unit case (70) and configured to send air to the pump mechanism (31 P).

7. The container refrigeration apparatus of claim 6, wherein
the cooling air inlet port (79a) is located in a space on a suction side of the cooling fan (79).

8. The container refrigeration apparatus of claim 6 or 7, further comprising:
a branch member (84) configured to guide part of air blown out by the cooling fan (79) to the electrical component (32, 33, 36, 82) which forms the gas supply device (30).
